# EUROPÄISCHE PATENTSCHRIFT

(11) **EP 1 433 186 B1**
(45) Veröffentlichungstag und Bekanntmachung des Hinweises auf die Patenterteilung: **07.05.2008**
(21) Anmeldenummer: 02762206.7
(22) Anmeldetag: 02.10.2002
(51) Int. Cl.: H01G 5/011

(54) **VARIABLER KONDENSATOR MIT ERHÖHTER STROMFÄHIGKEIT**
VARIABLE CAPACITOR HAVING AN INCREASED CURRENT CAPACITY
CONDENSATEUR VARIABLE A CAPACITE DE COURANT ELEVEE

(30) Priorität: 03.10.2001 CH 182301
(43) Veröffentlichungstag der Anmeldung: 30.06.2004
(73) Patentinhaber: Comet AG, 3175 Flamatt (CH)
(72) Erfinder: JAHREISS, Lothar, 8038 Zürich (CH); HUG, Bernhard, 3018 Bümpliz (CH); BIGLER, Walter, 1714 Heitenried (CH); HAMBERGER, Michael, 4950 Huttwill (CH)
(74) Vertreter: BOVARD AG
(86) Internationale Anmeldenummer: PCT/CH2002/000549
(87) Internationale Veröffentlichungsnummer: WO 2003/028789

(56) Entgegenhaltungen:
- DE-A- 3 806 855
- SU-A- 631 999
- SU-A- 739 667

## Beschreibung

Die Erfindung betrifft einen variablen Kondensator mit erhöhter Stromfähigkeit gemäss Patentanspruch 1 und Verwendungen gemäss den Patentansprüchen 11 und 12.

Variable Vakuumkondensatoren verfügen üblicherweise über einen metallischen Federbalg der einerseits den Strom von der mit ihm elektrisch verbundenen Elektrode zu den äusseren Kontaktstellen leitet und andererseits eine mechanisch verformbare Trennwand darstellt zwischen den um die Elektroden herrschenden Vakuum und dem äusseren atmosphärischen Umgebungsdruck. Um eine lange Lebensdauer zu erzielen, d.h. möglich viele Bewegungszyklen zu ermöglichen, muss das Balgmaterial so gewählt werden, dass es gute mechanische Eigenschaften besitzt. Andererseits muss es eine gute elektrische Leitfähigkeit aufweisen zur Minimierung der elektrischen Verluste und Vermeidung von unnötiger Erhitzung die sich ihrerseits wieder negativ auf das mechanische Langzeitverhalten auswirken kann. Durch die notwendige Faltenstruktur des Balges entstehen aber auch lange Stromwege die zu einer Erhöhung des elektrischen Längswiderstandes und zu einer erhöhten Serieninduktivität führen.

Nach US 3,611,075 ist ein variabler Vakuumkondensator bekannt, der sich durch eine niedrige Selbstresonanzfrequenz auszeichnet und der einen einseitigen, elektrischen Anschluss für Koaxialleitungen vorsieht. Er ist anwendungsspezifisch, resp. anwendungsfixiert. Ausserdem besteht er u.a. aus drei Isolatorteilen, was konstruktiv aufwendig und ebenfalls nachteilig ist.

Aufgabe der Erfindung ist es, einen variablen Kondensator anzugeben, der im Vergleich zu bisherigen Ausführungsformen und -grössen eine markante Steigerung der elektrischen Stromfähigkeit erlaubt, verbunden mit einer Vervielfachung bisher bekannter Lebensdauerwerte.

Eine weitere Aufgabe der Erfindung besteht darin, die Form des variablen Kondensators so zu gestalten, dass ein Austausch mit einer bestehenden Ausführungsform möglich ist, um so auf einfache Weise die Kenndaten einer bestehenden Anwendung mit minimalem Konstruktionsaufwand nachhaltig zu verbessern.

Erfindungsgemäss wird diese Aufgabe mit einem variablen Kondensator gemäss dem Wortlaut nach Patentanspruch 1 und Verwendungen nach den Patentansprüchen 11 und 12 gelöst.

Die Erfindung wird im Folgenden an Hand von Figuren beschrieben. Es zeigen:
- Fig. 1: Schematische Darstellung eines erfindungsgemässen variablen Kondensators mit erhöhter Stromfähigkeit im Schnitt
- Fig. 2: Erstes Ausführungsbeispiel eines anschlusskompatiblen variablen Vakuumkondensators
- Fig. 3: Zweites Ausführungsbeispiel eines variablen Vakuumkondensators mit kleinem unteren Anschlussring
- Fig. 4: Drittes Ausführungsbeispiel eines gasgefüllten variablen Kondensators mit einem Isolator als Teil des Gehäusebodens

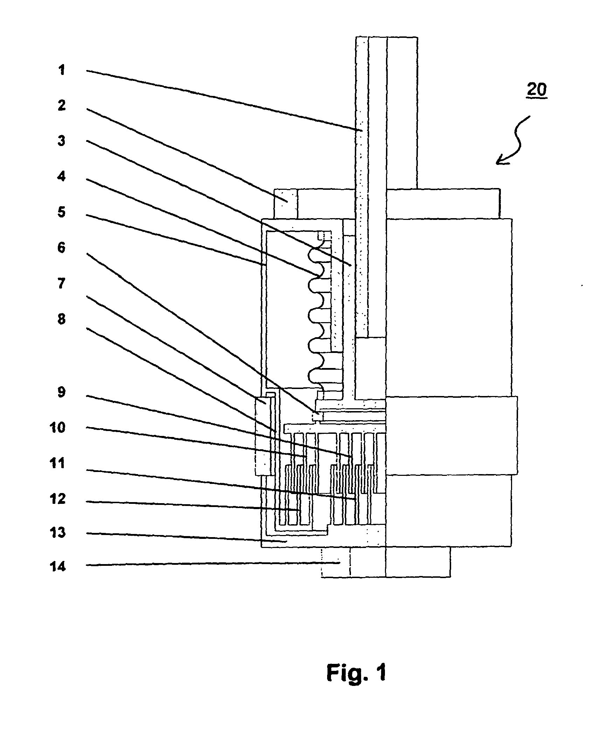

Fig. 1 zeigt in schematischer Darstellung einen variablen Kondensator mit erhöhter Stromfähigkeit im Schnitt.

Ein variabler Kondensator 20 mit einem Gehäuseboden 13 und einem daran auf der Aussenseite elektrisch leitend angebrachten Anschluss 14 weist auf der inneren Seite des Gehäusebodens 13 eine mit diesem elektrisch leitend verbundene, innere Elektrode 11 auf, die Teil eines fixen Elektrodenteil ist. Der Gehäuseboden 13 geht an seiner äusseren Begrenzung in ein zylinderförmiges Gehäuse über, an dem die untere Seite eines Isolatorringes 7 gasdicht befestigt ist. Auf der oberen Seite des Isolatorringes 7 befindet sich ebenfalls gasdicht befestigt ein zylindrischer Gehäusemantel 5, der an seinem oberen Ende von einem Gehäusedeckel mit einem daran auf der Aussenseite elektrisch leitend angebrachten Anschluss 2 abgeschlossen wird. Der Gehäusedeckel weist im Zentrum eine Öffnung für eine Verstellvorrichtung 1 aüf, die über eine Führungseinrichtung 3 einen variablen Elektrodenteil verschiebbar führt. Die Führungseinrichtung 3 ist über einen Federbalg 4 mit der Innenseite des Gehäusedeckels gasdicht verbunden. Der zwischen dem Gehäusemantel 5 und dem Federbalg 4 befindliche Raum dient der Evakuierung, bzw. einer Gasfüllung. Der variable Elektrodenteil, bestehend aus einer inneren Elektrode 9 und einer mit dieser galvanisch und mechanisch verbundenen, äusseren Elektrode 10, ist über einen Isolator 6 mit der Verstellvorrichtung 1 verbunden. Die inneren Elektrode 9 besteht aus einer Anzahl von Elektrodenelementen, bzw. Elektrodenblechen, die konzentrisch oder spiralförmig um die Mittelpunktsachse des Kondensators angeordnet sind. Mittels der Verstellvorrichtung 1 sind diese eintauchbar in die Elektroden des fixen Elektrodenteils.

Der Gehäusemantel 5 wird oberhalb seiner Befestigung am Isolatorring 7 auf seiner Innenseite mit einem inneren Mantelring 8 leitend fortgesetzt, an dessen unterem Ende eine äussere Elektrode 12 befestigt ist, die Teil des fixen Elektrodenteils ist. Damit ist der Gehäusemantel 5 mit der äusseren Elektrode 12 mechanisch und elektrisch verbunden. Die äussere Elektrode 12 besteht aus einer Anzahl von Elektrodenelementen, bzw. Elektrodenblechen, die konzentrisch oder spiralförmig die Mittelpunktsachse des Kondensators umgeben, aber galvanisch und mechanisch getrennt von der inneren Elektrode 11 des fixen Elektrodenteils angeordnet sind.

Die Elektrodenelemente 9, 10, 11, 12 können auch eine spiralförmige Ausbildung aufweisen.

Dadurch dass die äussere Elektrode 12 des fixen Elektrodenteils über den oberen Anschluss 2, den Gehäusemantel 5 und den inneren Mantelring 8 gespeist wird, bleibt der Federbalg 4 stromlos, da der Isolator 6 für die galvanische Trennung der Führungseinrichtung 3 mit Federbalg 4 vom variablen Elektrodenteil mit den Elektroden 9, 10 sorgt.

Durch Führung der elektrischen Stromlinien auf Pfaden ausserhalb des Federbalges 4 kann das Material für letzteren nach rein mechanischen Gesichtspunkten optimiert werden. Der elektrische Strom kann dann auf einem für den Hochfrequenzstrom noch vorteilhafteren metallischen Weg fliessen. Als topologische Konsequenz hieraus sind die Elektrodenpakete so auszulegen, dass das verstellende Element für den variablen Elektrodenteil mit den Elektroden 9, 10 einschliesslich Federbalg 4 stromlos bleibt. Dadurch erfährt der Federbalg keine Erwärmung, was sich materialschonend erweist. Dies kann dadurch erzielt werden, dass der variable Elektrodenteil, bzw. die verstellbare Elektrode, eine elektrische Brückenfunktion übernimmt, die zur Kapazitätsverstellung des Kondensators mehr oder weniger tief in zwei weitere, galvanisch voneinander getrennte Elektroden, die Teil des fixen Elektrodenteils sind, eingetaucht wird. Die beiden zuletzt genannten Elektroden 11, 12 können dann mit mechanisch steifen, elektrischen Verbindungen mit den Anschlusspunkten, bzw. den Anschlüssen des Kondensators verbunden werden. Mit den beiden Anschlüssen 2, 14 des Kondensators kann dieser so ausgebildet werden, dass er mit allgemein bekannten Konstruktionen gleicher oder ähnlicher Bauform eine 100%-ige Austauschbarkeit aufweist. Dies ist bei Nachrüstarbeiten besonders vorteilhaft.

Der Ausbildung der Elektroden sind weite Grenzen gesetzt. So können etwa die Elektrodenelemente der Elektrode 11 des fixen Elektrodenteils untereinander eine unterschiedliche Höhe aufweisen, wodurch neuartige Kapazitätsverhalten im Verstellbereich resultieren, die hier nicht näher beschrieben werden. Bevorzugt sind die Elektrodenelemente aber gleich hoch.

Eine Bauart mit Elektrodenelementen unterschiedlicher Höhe wie für die Elektrode 11 beschrieben gilt auch für die anderen Elektroden 9, 10 und 12, bzw. Teile davon. Erfindungsgemäss beträgt die Erhöhung der Strombelastbarkeit 20 - 30 % bei einer gleichzeitigen Erhöhung der Lebensdauer um das 5-Fache; d.h. es können bis zu 5x mehr Zyklen gefahren werden.

Der beschriebene Aufbau eines derartigen variablen Kondensators gilt bevorzugt für Vakuumkondensatoren, ist aber auch für gasgefüllte Kondensatoren prinzipiell gültig.

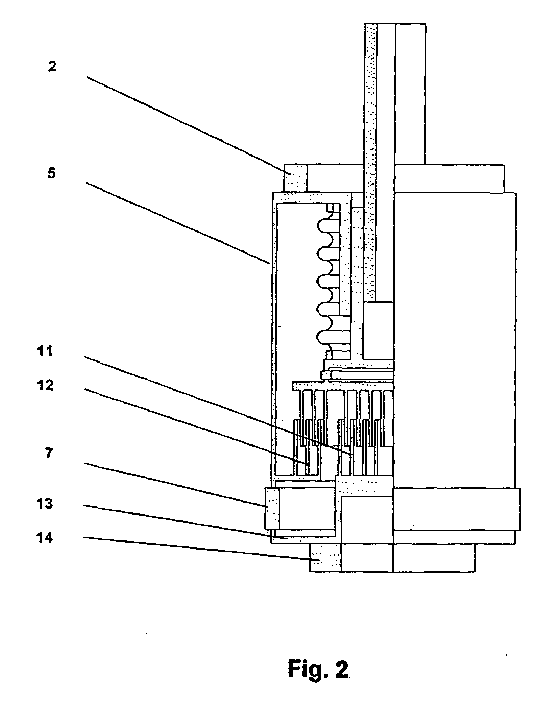

Fig. 2 zeigt ein erstes Ausführungsbeispiel eines anschlusskompatiblen variablen Vakuumkondensators.

Der dargestellte variable Vakuumkondensators entspricht im Wesentlichen der Bauart des Kondensators gemäss Fig. 1 und weist die nachstehenden Unterschiede auf. Der Isolatorring 7 weist einen Durchmesser von 90 mm und einen Querschnitt von 20 x 7 mm bei einer Kondensatorbauhöhe von 130 mm auf und befindet sich in geringem Abstand über dem Gehäuseboden 13. Der Gehäusemantel 5 ist länger ausgebildet, ein innerer Mantelring entfällt und die äussere Elektrode 12 des fixen Elektrodenteils sind knapp senkrecht über dem Isolatorring 7 des Gehäusemantels 5 befestigt. Die Kapazität beträgt 500 pF und die zulässige Spannung 10 kVpt (peak test).

Die Anschlüsse 2 und 14 für die Elektroden 12 und 11 sind ringförmig mit Aussendurchmessern 70 mm, resp. 35 mm gefertigt, so dass er damit eine Anschlussgeometrie von bestehenden variablen Vakuumkondensatoren der Bauhöhe 130 mm aufweist und gegen diese ohne weiteres ausgetauscht werden kann, also anschlusskompatibel ist.

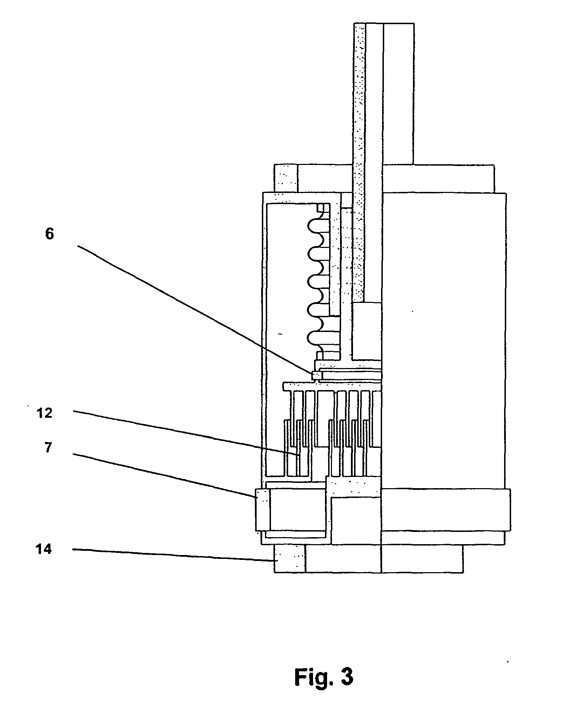

Fig. 3 zeigt ein zweites Ausführungsbeispiel eines variablen Vakuumkondensators mit grossem unterem Anschlussring.

Der dargestellte variable Vakuumkondensator entspricht im Wesentlichen der Bauart des Kondensators gemäss Fig. 2. Er weist die nachstehenden Unterschiede auf. Der Isolatorring 7 ist ein Keramikring mit den Massen 80 x 15 mm. Der Isolator 6 ist ein Keramikring von 40 mm Aussendurchmesser und einem Querschnitt von 15 x 5 mm. Die Bauhöhe beträgt 120 mm. Die Kapazität beträgt 800 pF und die zulässige Spannung 5 kVpt (peak test). Der Anschluss 14 für die Elektrode 12 ist ringförmig mit Aussendurchmesser 70 mm, gefertigt, so dass auch er damit die Bedingungen einer Anschlussgeometrie bestehender Vakuumkondensatoren mit Bauhöhe 120 mm erfüllt und mit diesem voll anschlusskompatibel ist.

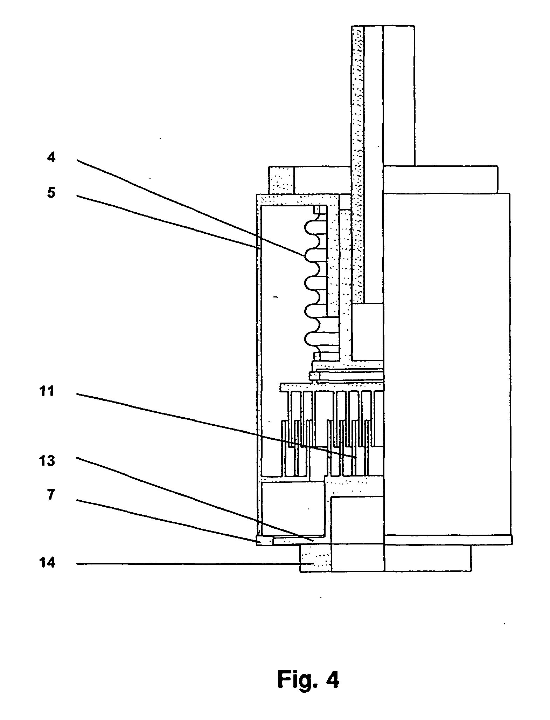

Fig. 4 zeigt ein drittes Ausführungsbeispiel eines gasgefüllten variablen Kondensators mit einem Isolator als Teil des Gehäusebodens.

Der dargestellte gasgefüllte variable Kondensator entspricht im Wesentlichen der Bauart des Kondensators gemäss Fig. 2. Er weist die nachstehenden Unterschiede auf. Der Isolatorring 7 ist scheibenförmig ausgebildet und ist ein Bestandteil des Gehäusebodens 13. Er hat einen Aussendurchmesser von 80 mm und einen Querschnitt von 5 x 15 mm. Der Kondensator hat eine Bauhöhe von 120 mm. Die Kapazität beträgt 1000 pF und die zulässige Spannung 5 kVpt (peak test). Der Anschluss 14 für die Elektrode 11 ist ringförmig mit Aussendurchmesser 52 mm und weist einen Querschnitt von 1,5 x 13 mm. Im Raum zwischen dem Federbalg 4 und dem Gehäusemantel 5 befindet sich eine übliche Gasfüllung.

Die Vorteile des erfindungsgemässen variablen Kondensators sind die höhere Strombelastbarkeit mit gleichzeitig mehrfacher Lebensdauer. Bisherige Kompromisslösungen zwischen elektrischen und mechanischen Anforderungen entfallen.

Im weiteren kann die Herstellung baugleich erfolgen, d.h. ein gleiches oder zumindest sehr ähnliches Gehäuse bietet sich an, wodurch ein einfaches "Upgrade" bezüglich höherem HF-Strom, höherer HF-Leistung und längerer Lebensdauer einer bereits bestehenden Gerätekonstruktion möglich wird.

Neukonstruktionen in denen ein derartiger Kondensator eingesetzt wird, kann für höhere HF-Ströme und -Leistungen ausgelegt werden ohne selbst dimensionell wachsen zu müssen.

Durch kleinere elektrische Bahnwiderstände entstehen geringere elektrische Verlustleistungen die zu höherem Gesamtwirkungsgrad führen. Kürzere elektrische Strompfade führen auch zu einer reduzierten Serieninduktivität, was den Anwendungsbereich für Vakuumkondensatoren bis weit in den UKW-Bereich (>150 MHz) erweitert.

Besonders vorteilhaft erweist sich, dass durch nur einen zweiten Isolator am variablen Elektrodenteil der Federbalg stromlos gehalten wird.

Verwendung derartiger variabler Kondensatoren finden sich in Hochfrequenz-Generatoren und in Matchboxen und Anpassnetzwerken für industrielle HF-Anwendungen, als verstellbare Filter in der HF-Leistungselektronik und im Leistungsteil von Sendeanlagen.

Erfindungswesentlich ist, dass der erfindungsgemässe Kondensator durch seine besondere Anordnung der Elektroden einen deutlich höheren Stromfluss zulässt als allgemein bekannte Konstruktionen, dass er sich gleichzeitig durch eine erhöhte Lebenserwartung auszeichnet und dass er anschlusskompatibel ist.

## Patentansprüche

1. Variabler Kondensator, umfassend einen fixen Elektrodenteil und einen variablen Elektrodenteil, einen Gehäuseboden (13), einen Isolatorring (7), einen Gehäusemantel (5), einen Federbalg (4) und eine Verstellvorrichtung (1), **gekennzeichnet dadurch, dass** der fixe Elektrodenteil aus einer inneren Elektrode (11) und einer von dieser galvanisch getrennten, äusseren Elektrode (12) besteht, dass der variable Elektrodenteil aus einer inneren Elektrode (9) und einer mit dieser galvanisch verbundenen, äusseren Elektrode (10) besteht, dass der variable Elektrodenteil über einen Isolator (6) mit der Verstellvorrichtung (1) verbunden ist und letztere über den Federbalg (4) mit dem Gehäusemantel (5) gasdicht verbunden ist, dass der Gehäusemantel (5) vom Gehäuseboden (13) durch einen Isolatorring (7) getrennt vorliegt und dass die inneren und äusseren Elektroden (9, 10) des variablen Elektrodenteils über eine Führungseinrichtung (3) mittels der Verstellvorrichtung (1) verschiebbar und in die inneren und äusseren Elektroden (11, 12) des fixen Elektrodenteils eintauchbar angeordnet sind, wobei der Federbalg (4) stromlos ist.

2. Variabler Kondensator nach Anspruch 1, **gekennzeichnet dadurch, dass** die äussere Elektrode (12) des fixen Elektrodenteils mit dem Gehäusemantel (5) elektrisch verbunden ist, wobei letzterer auf der oberen Seite einen Anschluss (2) der äusseren Elektrode (12) aufweist, über den die eine Stromzuführung erfolgt, während die innere Elektrode (11) des fixen Elektrodenteils einen unteren Anschluss (14) aufweist, über den die andere Stromzuführung erfolgt.

3. Variabler Kondensator nach Anspruch 1 oder 2, **gekennzeichnet dadurch, dass** die äussere Elektrode (12) des fixen Elektrodenteils mittels eines inneren Mantelrings (8) mit dem Gehäusemantel (5) elektrisch verbunden ist.

4. Variabler Kondensator nach einem der Ansprüche 1 - 3, **gekennzeichnet dadurch, dass** er zu bestehenden eine äusserlich baugleiche Form aufweist und daher mit diesen austauschbar, bzw. anschlusskompatibel ist.

5. Variabler Kondensator nach einem der Ansprüche 1 - 4, **gekennzeichnet dadurch, dass** die Elektrodenelemente der Elektroden (9, 10, 11, 12) aus konzentrisch angeordneten Einzelelektroden bestehen.

6. Variabler Kondensator nach einem der Ansprüche 1 - 5, **gekennzeichnet dadurch, dass** die Elektroden (9, 10, 11, 12) konzentrisch zueinander angeordnet sind.

7. Variabler Kondensator nach einem der Ansprüche 1 - 6, **gekennzeichnet dadurch, dass** die Elektroden (9, 10, 11, 12) aus spiralförmig angeordneten Elektrodenelementen, bzw. aus Einzelelektroden bestehen.

8. Variabler Kondensator nach Anspruch 7, **gekennzeichnet dadurch, dass** die Elektroden (9, 10, 11, 12) konzentrisch zueinander angeordnet sind.

9. Variabler Kondensator nach einem der Ansprüche 1 - 8, **gekennzeichnet dadurch, dass** die äusseren Elektroden (10, 12) bezüglich den inneren Elektroden (9, 11) eine unterschiedliche Elektrodenhöhe aufweisen, bevorzugt aber gleich hoch sind.

10. Variabler Kondensator nach einem der Ansprüche 1 - 9, **gekennzeichnet dadurch, dass** die Elektrodenelemente der Elektroden (9, 10, 11, 12) untereinander eine unterschiedliche Höhe aufweisen, bevorzugt aber gleich hoch sind.

11. Verwendung des variablen Kondensators nach einem der Ansprüche 1 - 10 in Hochfrequenz-Generatoren und in Matchboxen und Anpassnetzwerken für industrielle HF-Anwendungen.

12. Verwendung des variablen Kondensators nach einem der Ansprüche 1 - 10 in verstellbaren Filtern in der HF-Leistungselektronik und im Leistungsteil von Sendeanlagen.

## Claims

1. Variable capacitor, comprising a fixed electrode part and a variable electrode part, a housing bottom (13), an insulator ring (7), a housing jacket(5), a bellows, and an adjustment device (1), **characterised in that** the fixed electrode part consists of an inner electrode (11) and an outer electrode (12) galvanically separated from the former, **in that** the variable electrode part consists of an inner electrode (9) and an outer electrode (10) connected galvanically to the former, **in that** the variable electrode part is connected via an insulator (6) to the adjustment device (1), and the latter is connected by way of the bellows (4) in a gas-tight manner to the housing jacket(5), **in that** the housing jacket (5) is separated from the housing bottom (13) by an insulator ring (7), and **in that** the inner and outer electrodes (9, 10) of the variable electrode part are arranged so as to be able to slide by means of the adjustment device (1) via a guide device and able to dip into the inner and outer electrodes (11, 12) of the fixed electrode part, the bellows being current-free.

2. Variable capacitor according to claim 1, **characterised in that** the outer electrode (12) of the fixed electrode part is electrically connected to the housing jacket (5), the latter having on the top a connection (2) of the outer electrode (12) through which one power supply is achieved, while the inner electrode (11) of the fixed electrode part has a lower connection (14) through which the other power supply is achieved.

3. Variable capacitor according to claim 1 or 2, **characterised in that** the outer electrode (12) of the fixed electrode part is electrically connected to the housing jacket (5) by way of an inner jacket ring (8).

4. Variable capacitor according to one of the claims 1 - 3, **characterised in that** it has an externally identically constructed form with respect to existing variable capacitors and therefore can replace them or is connection-compatible with them.

5. Variable capacitor according to one of the claims 1 - 4, **characterised in that** the electrode elements of the electrodes (9, 10, 11, 12) consist of concentrically arranged individual electrodes.

6. Variable capacitor according to one of the claims 1 - 5, **characterised in that** the electrodes (9, 10, 11, 12) are arranged concentrically with respect to one another.

7. Variable capacitor according to one of the claims 1 - 6, **characterised in that** the electrodes (9, 10, 11, 12) consist of helically arranged electrode elements or of individual electrodes.

8. Variable capacitor according to claim 7, **characterised in that** the electrodes (9, 10, 11, 12) are arranged concentrically with respect to one another.

9. Variable capacitor according to one of the claims 1 - 8, **characterised in that** the outer electrodes (10, 12) <can> have a different electrode height than the inner electrodes (9, 11), but preferably have the same height.

10. Variable capacitor according to one of the claims 1 - 9, **characterised in that** the electrode elements of the electrodes (9, 10, 11, 12) <can> have a different electrode height with respect to one another, but preferably have the same height.

11. Use of the variable capacitor according to one of the claims 1 - 10 in high-frequency generators and matchboxes and matching networks for industrial HF applications.

12. Use of the variable capacitor according to one of the claims 1 - 10 in adjustable filters in HF power electronics and in the power unit of transmitting stations.

## Revendications

1. Condensateur variable, comprenant une partie d'électrode fixe et une partie d'électrode variable, un fond de carter (13), une bague d'isolateur (7), une enveloppe de carter (5), un soufflet de ressort (4) et un dispositif de réglage (1), **caractérisé en ce que** la partie fixe d'électrode se compose d'une électrode interne (11) et d'une électrode externe reliée galvaniquement (12), **en ce que** la partie d'électrode variable se compose d'une électrode interne (9) et d'une électrode externe reliée galvaniquement (10), **en ce que** la partie d'électrode variable est reliée par un isolateur (6) au dispositif de réglage (1) et ce dernier est relié de manière imperméable au gaz par le soufflet de ressort (4) à l'enveloppe de carter (5), **en ce que** l'enveloppe de carter (5) est séparée du fond de carter (13) par une bague d'isolateur (7) et **en ce que** les électrodes internes et externes (9, 10) de la partie d'électrode variable sont coulissantes par un dispositif de guidage (3) au moyen du dispositif de réglage (1) et sont disposées en étant introduites dans les électrodes internes et externes (11, 12) de la partie fixe d'électrode, le soufflet de ressort (4) étant sans courant.

2. Condensateur variable selon la revendication 1, **caractérisé en ce que** l'électrode externe (12) de la partie d'électrode fixe est reliée électriquement à l'enveloppe de carter (5), cette dernière présentant sur la face supérieure un raccordement (2) de l'électrode externe (12), par lequel s'effectue une amenée de courant tandis que l'électrode interne (11) de la partie d'électrode fixe présente un raccordement inférieur (14) qui permet d'assurer l'autre amenée de courant.

3. Condensateur variable selon la revendication 1 ou 2, **caractérisé en ce que** l'électrode externe (12) de la partie d'électrode fixe est relié électriquement à l'enveloppe de carter (5) au moyen d'une bague interne d'enveloppe (8).

4. Condensateur variable selon l'une des revendications 1 à 3, **caractérisé en ce qu'**il présente une forme extérieure similaire à celle existante et est donc interchangeable respectivement de connexion compatible.

5. Condensateur variable selon l'une des revendications 1 à 4, **caractérisé en ce que** les éléments des électrodes (9, 10, 11, 12) se composent d'électrodes individuelles disposées concentriquement.

6. Condensateur variable selon l'une des revendications 1 à 5, **caractérisé en ce que** les électrodes (9, 10, 11, 12) sont disposées concentriquement les uns par rapport aux autres.

7. Condensateur variable selon l'une des revendications 1 à 5, **caractérisé en ce que** les électrodes (9, 10, 11, 12) se composent d'éléments d'électrode disposés en spiral respectivement d'électrodes individuelles.

8. Condensateur variable selon la revendication 7, **caractérisé en ce que** les électrodes (9, 10, 11, 12) sont disposées concentriquement les unes par rapport aux autres.

9. Condensateur variable selon l'une des revendications 1 à 5, **caractérisé en ce que** les électrodes externes (10, 12) par rapport aux électrodes internes (9, 11) présentent une hauteur d'électrode différente, de préférence sont de même hauteur.

10. Condensateur variable selon l'une des revendications 1 à 9, **caractérisé en ce que** les éléments des électrodes (9, 10, 11, 12) présentent entre eux une hauteur différente, mais de préférence sont de même hauteur.

11. utilisation du condensateur variable selon l'une des revendications 1 à 10 dans des générateurs haute-fréquence et dans des boitiers d'ajustement et des réseaux d'adaptation pour des applications industrielles HF.

12. utilisation du condensateur variable selon l'une des revendications 1 à 10 dans des filtres réglables dans l'électronique de puissance HF et dans la partie de puissance d'installations émettrices.
